# EUROPEAN PATENT SPECIFICATION

(11) **EP 4 614 964 B1**
(45) Date of publication and mention of the grant of the patent: **02.12.2026**
(21) Application number: 25191490.9
(22) Date of filing: 27.06.2022
(51) Int. Cl.: H04N 17/00, H04N 5/77, H04N 5/783, H04N 7/18

(54) **STALE VIDEO DETECTION**
ERKENNUNG VON VERALTETEN VIDEOS
DÉTECTION VIDÉO PÉRIMÉE

(30) Priority: 28.06.2021 US 202163215582 P
(43) Date of publication of application: 10.09.2025
(62) Document number(s) of the earlier application(s) in accordance with Art. 76 EPC: 22833992.5 / 4 364 401
(73) Proprietor: Gentex Corporation, Zeeland, MI 49464 (US)
(72) Inventor: OOSTERHOUSE, Andrew J., Michigan (US); ZWAGERMAN, Michael D., Michigan (US); BLAUM, Tyler W., Michigan (US)
(74) Representative: Müller-Boré & Partner Patentanwälte PartG mbB

(56) References cited:
- US-A1- 2009 147 861
- US-A1- 2015 281 742
- US-A1- 2020 244 841

## Description

### FIELD OF INVENTION

The present invention relates in general to video systems and, more particularly, to video systems operable to detect stale images.

### BACKGROUND OF INVENTION

In some instances, a video system may erroneously present "stale video." Stale video generally means old video that have not been updated with new frames. This may be particularly problematic for displays incorporated into vehicle rearview assemblies. Specifically, presenting stale video to a vehicle occupant may pose significant safety risks. However, there are complications in ensuring stale video is not presented by vehicle video systems, because incoming framerates from cameras, such as rearview cameras or backup cameras, are often variable, but the display framerate maintains constant. Thus, the display and the cameras may have different frame rates at any given time. Accordingly, some repeated frames are expected when the frame rate of the display is greater than that of the camera, due to the display advancing to a new frame before a new image is received from the camera.

Document US 2015/0281742 A1 discloses a circuit arrangement for processing digital video stream information providing a solution to detect frame freeze based on generated checksums.

### SUMMARY

The invention is set out in the independent claim 1. Preferred embodiments of the invention are outlined in the dependent claims.

In accordance with the present disclosure, the problems associated with stale video detection for systems where the camera and display may have different frame rates have been substantially reduced or eliminated.

According to one aspect which is not claimed, a system is disclosed. The system may comprise a camera, a buffer, a display, and/or a controller. The camera may be operable to capture a series of images at a first frame rate. In some embodiments, the first frame rate may be variable. The buffer may have a first number of memory storage slots. Additionally, the buffer may be operable to: at a frequency of time intervals, sequentially and cyclically store into the memory storage slots, the most current image received from the camera at each interval. The display may be operable to present images at a second frame rate, sequentially and cyclically from the memory storage slots. In some embodiments, the second frame rate may be greater than the first frame rate. Accordingly, the first frame rate may be less than the second frame rate. In some embodiments, the first number may be determined based, at least in part, on a highest expected ratio between the first and second frame rates. The controller may be operable to: assign hash values to images of each frame displayed by the display; store novel hash values in a memory; maintain a counter; and determine if one or more images in the buffer are stale. In some embodiments, the controller may be further operable to not store repeat hash values in the memory. In some embodiments, the memory may retain only a second number of the stored novel hash values such that only the most recent stored novel hash values are retained. The second number may be greater than or equal to the first number. The counter may be maintained such that assigning a repeat hash value increments the counter by one and assigning novel hash values resets the counter to zero. Further, the stale images may be determined based, at least in part, on the counter value. In some embodiments, the determination that one or more images in the buffer are stale may be further based, at least in part, on the counter value exceeding the first number. In some embodiments, the controller may be further operable to prevent stale images from being displayed by the display. Additionally or alternatively, the display may be operable to display a notification related to the determination of the buffer having one or more stale images.

In accordance with another aspect which is not claimed of the present disclosure, a device is disclosed. In some embodiments, the device may be a vehicular rearview assembly. Further, the device may comprise a display and a controller. The display may be operable to display images at a first frame rate. The controller may be operable to receive images at a second frame rate. In some embodiments, the images may be operably received from a camera having a field of view rearward relative a vehicle in which the device may be disposed. In some embodiments, the first and second frame rates may be different. Additionally, the second frame rate may be variable. Additionally, the controller may be further operable to, at an interval frequency, sequentially and cyclically store the most current received image in a buffer having a first number of memory storage slots. Additionally, the display may be further operable to display images sequentially and cyclically from the memory storage slots. Further, the controller may be operable to assign hash values to images of each frame displayed by the display; store novel hash values in a memory; maintain a counter; and determine if one or more images in the buffer are stale. In some embodiments, the controller may be further operable to not store repeat hash values in the memory. In some embodiments, the memory may retain only a second number of the stored novel hash values such that only the most recent stored novel hash values are retained. The second number may be greater than or equal to the first number. The counter may be maintained such that assigning a repeat hash value increments the counter by one and assigning novel hash values resets the counter to zero. Further, the stale images may be determined based, at least in part, on the counter value. In some embodiments, the determination that one or more images in the buffer are stale may be further based, at least in part, on the counter value exceeding the first number. In some embodiments, the controller may be further operable to prevent stale images from being displayed by the display. Additionally or alternatively, the display may be operable to display a notification related to the determination of the buffer having one or more stale images.

In accordance with another aspect which is claimed, a system is disclosed. The system comprises a camera, a buffer, a video recorder, and/or a controller. The camera is operable to capture a series of images at a first frame rate. In some embodiments, the first frame rate may be variable. The buffer has a first number of memory storage slots. Additionally, the buffer is operable to: at a frequency of time intervals, sequentially and cyclically store into the memory storage slots, the most current image received from the camera at each interval. The video recorder is operable to record images at a second frame rate, sequentially and cyclically from the memory storage slots. In some embodiments, the second frame rate may be greater than the first frame rate. Accordingly, the first frame rate may be less than the second frame rate. In some embodiments, the first number may be determined based, at least in part, on a highest expected ratio between the first and second frame rates. The controller is operable to: assign hash values to images of each frame recorded by the video recorder; store novel hash values in a memory; maintain a counter; and determine if one or more images in the buffer are stale. In some embodiments, the controller may be further operable to not store repeat hash values in the memory. In some embodiments, the memory may retain only a second number of the stored novel hash values such that only the most recent stored novel hash values are retained. The second number may be greater than or equal to the first number. The counter is maintained such that assigning a repeat hash value increments the counter by one and assigning novel hash values resets the counter to zero. Further, the stale images are determined based, at least in part, on the counter value. In some embodiments, the determination that one or more images in the buffer are stale may be further based, at least in part, on the counter value exceeding the first number. In some embodiments, the controller may be further operable to prevent stale images from being recorded by the video recorder. Additionally or alternatively, the video recorder may be operable to record a notification related to the determination of the buffer having one or more stale images.

In accordance with yet another aspect which is not claimed of the present disclosure, a device is disclosed. In some embodiments, the device may be a vehicular rearview assembly. Further, the device may comprise a video recorder and a controller. The video recorder may be operable to record images at a first frame rate. The controller may be operable to receive images at a second frame rate. In some embodiments, the images may be operably received from a camera having a field of view rearward relative a vehicle in which the device may be disposed. In some embodiments, the first and second frame rates may be different. Additionally, the second frame rate may be variable. Additionally, the controller may be further operable to, at an interval frequency, sequentially and cyclically store the most current received image in a buffer having a first number of memory storage slots. Additionally, the video recorder may be further operable to record images sequentially and cyclically from the memory storage slots. Further, the controller may be operable to assign hash values to images of each frame recorded by the video recorder; store novel hash values in a memory; maintain a counter; and determine if one or more images in the buffer are stale. In some embodiments, the controller may be further operable to not store repeat hash values in the memory. In some embodiments, the memory may retain only a second number of the stored novel hash values such that only the most recent stored novel hash values are retained. The second number may be greater than or equal to the first number. The counter may be maintained such that assigning a repeat hash value increments the counter by one and assigning novel hash values resets the counter to zero. Further, the stale images may be determined based, at least in part, on the counter value. In some embodiments, the determination that one or more images in the buffer are stale may be further based, at least in part, on the counter value exceeding the first number. In some embodiments, the controller may be further operable to prevent stale images from being recoded by the video recorder. Additionally or alternatively, the video recorder may be operable to record a notification related to the determination of the buffer having one or more stale images.

These and other aspects, objects, and features of the present disclosure will be understood and appreciated by those skilled in the art upon studying the following specification, claims, and appended drawings. It will also be understood that features of each embodiment disclosed herein may be used in conjunction with, or as a replacement for, features in other embodiments.

### BRIEF DESCRIPTION OF FIGURES

In the drawings:

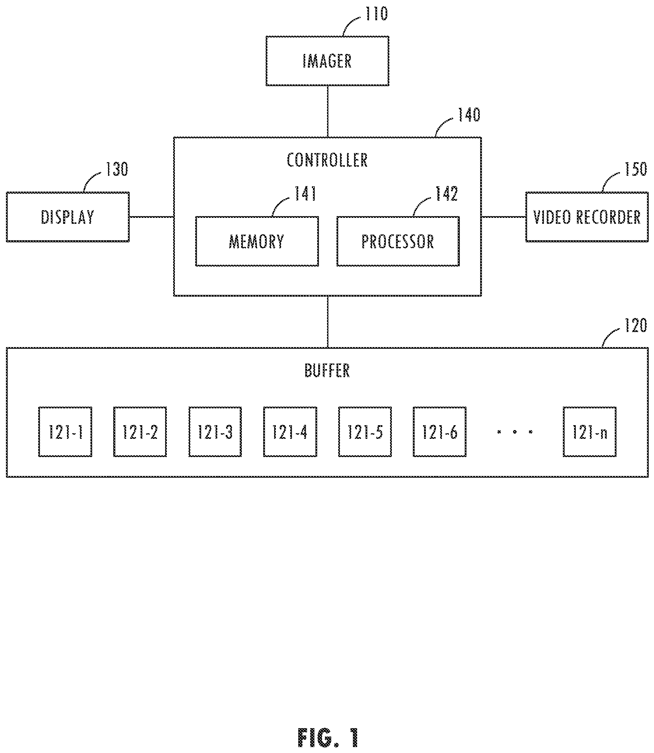

**Figure 1****:** a schematic representation of a video system.

### DETAILED DESCRIPTION

For the purposes of description herein, the specific devices and processes illustrated in the attached drawings and described in this disclosure are simply exemplary embodiments of the inventive concepts defined in the appended claims. Hence, specific characteristics relating the embodiments disclosed herein are not limiting, unless the claims expressly state otherwise.

The present disclosure is directed to a video system **100.** Accordingly, **Figure 1** illustrates a schematic representation of an embodiment of video system **100.** Video system **100** may comprise an imager **110,** a buffer **120,** a display **130,** a controller **140,** and/or a video recorder **150.** In some embodiments, video system **100** may be incorporated into a vehicle.

Imager **110** may be any device configured and/or operable to capture light and generate a plurality of corresponding images. For example, imager **110** may be a camera. Accordingly, imager **110** may be a Semi-Conductor Charge-Coupled Device (CCD) or a pixel sensor of Complementary Metal-Oxide-Semi-Conductor (CMOS) technologies. In some embodiments, the images may be captured in series as a video stream. Thus, the images may be captured in accordance with a first frame rate. The first frame rate may be approximately 30 frames per second. In some embodiments, the first frame rate may be substantially constant. In other embodiments, the first frame rate may be variable. In some such embodiments, the first frame rate may vary based, at least in part, on imaging conditions. In some embodiments, the images captured by imager **110** may have a field of view corresponding to a scene exterior the vehicle. Accordingly, the field of view may correspond to a field of view traditionally associated with an interior rearview assembly, driver side exterior rearview assembly, passenger side exterior rearview assembly, or back-up camera. Thus, the scene may be rearward and/or to the side relative the vehicle.

Buffer **120** comprises a first number of memory storage slots **121.** Therefore, buffer **120** may be stored in a computer memory, such as random-access memory (RAM). Further, the computer memory may be a non-transitory computer-readable media (CRM). Additionally, buffer **120** may be communicatively connected to imager **110.** As used herein, "communicatively connected" may mean connected directly or indirectly though one or more electrical components. Thus, buffer **120** may be configured and/or operable to receive images from imager **110.** Accordingly, buffer **120** may be configured and/or operable to sequentially and cyclically store a most current complete image received from imager **110** into one of the memory storage slots **121** at a time interval. The time interval may have a frequency. In some embodiments, the frequency may be substantially constant. Therefore, at each time interval, the most current image is stored in a storage slot **121.** For example, at a first time interval, the most recent image received from imager **110** may be a first image. Thus, the first image may be stored in a first storage slot **121-1.** Subsequently, at a second time interval, the most recent image received from imager **110** may then be stored in a second storage slot **121-2.** In some instances, this image may again be the first image if buffer **120** has not yet completely received a second image from imager **110.** Alternatively, this image may be the second image if the second image has been completely received from imager **110.** The second image may be a subsequently recorded image relative the first image. This process may repeat itself through subsequent time intervals and storage slots (e.g., **121-3, 121-4, 121-5,** ... **121-n)** until an image is stored in the last storage slot **121-n** of the first number of storage slots **121.** Once an image is stored in the in the last storage slot **121-n,** at the next time interval, buffer **120** may cyclically revert back to the beginning and then store the most current image in first storage slot **121-1,** overwriting the first image.

Display **130** may be any device configured to and/or operable to present one or more digital images for viewing by a user or an occupant. In some embodiments, display **130** may be configured and/or operable to directly retrieve the images for presentation from buffer **120.** Accordingly, display element **130** may be of LCD, LED, OLED, micro-LED, plasma, DLP, or another technology. In some embodiments, display element **130** may be disposed in a rearview assembly, such as an interior rearview assembly of the vehicle. The images presented by display **130** may be presented at a second frame rate. Thus, the images presented by display **130** may be a video stream. Additionally, the second frame rate may be substantially constant. In some embodiments, the second frame rate may be approximately 60 frames per second. Accordingly, the second frame rate may be substantially greater than the first frame rate. In some embodiments, the second frame rate may be substantially equal to the time interval frequency. In some embodiments, the first number may be determined based, at least in part, on a highest expected ratio between the first and second frame rates. Further, display **130** may be communicatively connected to buffer **120.** Accordingly, the frames presented by display **130** may be retrieved sequentially and cyclically from the storage slots **121.** For example, the image stored in the first storage slot **121-1** may be presented in a first frame and, subsequently, the image stored in the second storage slot **121-2** may be presented in a second frame. This may be continued until the image stored in an n^{th} storage slot **121-n** is presented in an n^{th} frame. Further, after presenting the image in the n^{th} storage slot **121-n,** display **130** may cyclically come back to the first storage slot **121-1** and present the image stored therein as an n+1 frame of a video stream presented by display **130,** and the process may re-progress through the storage slots **121,** and so forth.

Controller **140** may be communicatively connected to imager **110,** buffer **120,** and/or display **130.** In some embodiments, controller **140** may be configured and/or operable to receive the one or more images from imager **110.** In some such embodiments, controller **140** may be configured to and/or operable to sequentially and cyclically store the most current complete image received from imager **110** into memory storage slots **121** at the time interval. In some embodiments, controller **140** may be configured and/or operable to provide display **130** with the one or more images for presentation. In some such embodiments, controller **140** may be configured and/or operable to sequentially and cyclically retrieve the one or more images from the memory storage slots **121** and relay them to display **130.** Further, controller **140** may comprise a memory **141** and a processor **142.**

Memory **141** be a non-transitory computer-readable media (CRM). Accordingly, memory **141** may be configured to and/or operable to store one or more instructions, such as one or more algorithms, to provide for the configuration and operation of controller **140.** Examples of memory **141** include conventional hard disks, solid-state memories, random access memories (RAM), read-only memory (ROM), erasable programmable read-only memory (EPROM), electronically erasable programmable read-only memory (EEPROM), optical or magnetic disks, dynamic random-access memory (DRAM). In some embodiments, memory **141** may comprise buffer **120.** In other embodiments, memory **141** and buffer **120** may be separate entities. Further, memory **141** may store one or more algorithm. The algorithm may be configured to and/or operable to detect stale images. To detect the stale images, the algorithm may be configured and/or operable to assign hash values to images added to the memory storage slots **121** of buffer **120** and/or images of each frame presented by display **130.** In some embodiments, the hash may be a cyclic redundancy check hash (CRC).

The assigned hash values may be stored in the memory **141.** In some embodiments, controller **140** may only store novel hash values in memory **141.** Thus, in such an embodiment, controller **140** may not store repeat or duplicate hash values in memory **141.** Additionally, in some embodiments, controller **140** may retain only a second number of the stored hash values. The second number of retained stored hash values, may be only the most recent stored hash values. In some embodiments, the second number may be greater than or equal to the first number. Accordingly, the second number, in some such embodiments, may be equal to the first number.

Additionally, the algorithm may be configured and/or operable to maintain a counter. Assigned hash values that match any previously assigned hash value stored in memory **141** increment the counter by one. Conversely, assigned hash values that do not match any previously assigned hash value reset the counter to zero. Further, the algorithm may be configured and/or operable to determine that one or more images in the buffer are stale based, at least in part, on the counter value exceeding the number of frames stored in buffer.

Processor **142** may be communicatively connected to memory **141.** Further, processor **142** may be any device or electronic circuit configured and/or operable to process or execute one or more sets of electronic instructions, such as the algorithm. These instructions may be stored in memory **141.** Examples of processor **142** may include a central processing unit (CPU), a microprocessor, and/or an application specific integrated circuit (ASIC).

In some embodiments, the algorithm may be operable to prevent stale images from being presented by display **130.** Based, at least in part, on the determination of one or more of the images in buffer **120** being stale, controller **140** may prevent to the images from being presented by display **130.** In some such embodiments, controller **140** may send an error notification for presentation by display **130.**

Video recorder **150** may be any device configured and/or operable to record, store, and/or save a series of received images. For example, video recorder **150** may be part of a black box for a vehicle. Thus, video recorder **150** may comprise a computer memory. The computer memory may be the same as or substantially similar to memory **141.** Additionally, video recorder **150** may be communicatively connected to imager **100,** buffer **120,** display **130,** and/or controller **140.** The received images may be received and saved as a video stream at a third frame rate. The video steam may comprise a series of image frames. Additionally, the third frame rate may be substantially constant. In some embodiments, the third frame rate may be approximately 60 frames per second. Accordingly, the third frame rate may be substantially greater than the first frame rate. In some embodiments, the third frame rate may be substantially equal to the time interval frequency. In some embodiments, the first number may be determined based, at least in part, on a highest expected ratio between the first and third frame rates. In some embodiments, the series of received images may be retrieved sequentially and cyclically from the storage slots **121** of buffer **120.** For example, the image stored in the first storage slot **121-1** may be recorded in video recorder **150** in a first frame and, subsequently, the image stored in the second storage slot **121-2** may be recorded in a second frame. This may be continued until the image stored in an n^{th} storage slot **121-n** is presented in an n^{th} frame. Further, after recording the image in the n^{th} storage slot **121-n,** video recorder **150** may cyclically come back to the first storage slot **121-1** and record the image stored therein as an n+1 frame of the video stream recorded by video recorder **150,** and the process may re-progress through the storage slots **121,** and so forth. In some embodiments, video recorder **150** may be configured and/or operable to directly retrieve the images for recording from buffer **120.** In other embodiments, video recorder **150** may be configured and/or operable to indirectly retrieve the images for recording from display **130.** In yet other embodiment, video recorder **150** may be configured and/or operable to indirectly retrieve the images for recording from controller **140.** In yet other embodiments, video recorder **150** may be a part of controller **140,** such as a part of memory **141.**

In some embodiments, the algorithm may be configured and/or operable to prevent stale images from being recorded by video recorder **150.** Accordingly, based, at least in part, on the determination of one or more of the images in buffer **120** being stale, controller **140** may prevent the images from being recorded by video recorder **150.** In some such embodiments, controller **140** may send an error notification for recordation by video recorder **150.**

Embodiments of video system **100** may have one or more advantages. Video system **100** may allow for the presentation of images captured by imager **110** by display **130** when imager **110** and display **130** have different frame rates. Further, safety is greatly increased as stale video may be detected and/or prevented despite a disparity in frame rates. The disparity in frame rates between imager **110** and display **130** means that some image repetition is expected. For example, if display **130** has a frame rate twice that of imager **110,** one would expect an image captured by imager **100** to be presented by display **130** roughly twice, due to display **130** advancing through two frames in the time it takes a new image to be captured by imager **110.** This is further complicated in instances where the frame rate of imager **110** is variable. Thus, stale video may not be detected by the simple existence of repetition in image presentation, as false detection would commonly occur. However, the counter may allow for detecting stale video by detecting that images are repetitive in an amount greater than what may be anticipated based on the disparity in frame rates. Additionally, video system **100** may allow for video recorder **150** to record images captured by imager **110,** even in instances where some video recorders **150** may require recorded video to be recorded at a different frame rate than that provided by imager **110.** Further, video recorder **150** may record images captured by imager **110** at a substantially constant frame rate in contrast to a variable frame rate provided by imager **110.** Additionally, only storing novel hash values may have the advantage of substantially reduced memory demands. This advantage has an increasing impact so as the disparity in frame rates increases. This is such because as the disparity in frame rate increases, the number of anticipated repetitions also increases due to the faster frame advancement of display **130** relative imager **110.** These repeated images will have the same hash values. Accordingly, a smaller fraction of the assigned hashes will be stored.

As used herein, the term "and/or," when used in a list of two or more items, means that any one of the listed items can be employed by itself, or any combination of the two or more of the listed items can be employed. For example, if a composition is described as containing components A, B, and/or C, the composition can contain A alone; B alone; C alone; A and B in combination; A and C in combination; B and C in combination; or A, B, and C in combination.

The terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises ... a" does not, without more constraints, preclude the existence of additional identical elements in the process, method, article, or apparatus that comprises the element.

The term "substantially," and variations thereof, will be understood by persons of ordinary skill in the art as describing a feature that is equal or approximately equal to a value or description. For example, a "substantially planar" surface is intended to denote a surface that is planar or approximately planar. Moreover, "substantially" is intended to denote that two values are equal or approximately equal. If there are uses of the term which are not clear to persons of ordinary skill in the art, given the context in which it is used, "substantially" may denote values within about 10% of each other, such as within about 5% of each other, or within about 2% of each other.

It is to be understood that although several embodiments are described in the present disclosure, numerous variations, alterations, transformations, and modifications may be understood by one skilled in the art, and the present disclosure is intended to encompass these variations, alterations, transformations, and modifications as within the scope of the appended claims, unless their language expressly states otherwise.

## Claims

1. A system (100) comprising:
a camera (110) configured to capture a series of images at a first frame rate;
a buffer (120) having a first number of memory storage slots (121), the buffer (120) configured to: at a frequency of time intervals, sequentially and cyclically store into the memory storage slots (121), the most current image received from the camera (110) at each interval;
a video recorder (150) configured to record images at a second frame rate, sequentially and cyclically from the memory storage slots (121); and
a controller (140) configured to:
assign hash values to images of each frame recorded by the video recorder (150);
store novel hash values in a memory (141);
maintain a counter, wherein:
assigning a repeat hash value increments the counter by one, and
assigning novel hash values resets the counter to zero; and
determine that one or more images in the buffer (120) are stale based, at least in part, on the counter value.

2. The system of claim 1, wherein the controller (140) is further configured to not store repeat hash values in the memory (141).

3. The system of claim 1, wherein:
the memory (141) retains only a second number of the stored novel hash values such that only the most recent stored novel hash values are retained; and
the second number is greater than or equal to the first number.

4. The system of claim 3, wherein the second number is equal to the first number.

5. The system of claim 1, wherein the determination that one or more images in the buffer (120) are stale is further based, at least in part, on the counter value exceeding the first number.

6. The system of claim 1, wherein the first frame rate is variable.

7. The system of claim 1, wherein the first frame rate is less than the second frame rate.

8. The system of claim 1, wherein the first number is determined, at least in part, on a highest expected ratio between the first and second frame rates.

9. The system of claim 1, wherein the controller (140) is further configured to prevent stale images from being recorded by the video recorder (150).

## Patentansprüche

1. Ein System (100), das Folgendes umfasst:
eine Kamera (110), die dazu konfiguriert ist, eine Reihe von Bildern mit einer ersten Bildfrequenz aufzunehmen;
einen Puffer (120) mit einer ersten Anzahl von Speicherstellen bzw. Speicherplätzen (*memory storage slots*) (121), wobei der Puffer (120) konfiguriert ist, um: in einer Frequenz von Zeitintervallen das aktuellste Bild, das von der Kamera (110) in jedem Intervall empfangen wird, sequenziell und zyklisch in den Speicherplätzen (121) zu speichern;
einen Videorekorder (150), der dazu konfiguriert ist, Bilder mit einer zweiten Bildfrequenz sequenziell und zyklisch aus den Speicherplätzen (121) aufzunehmen; und
eine Steuervorrichtung (140), die konfiguriert ist, um Folgendes zu bewerkstelligen:
Zuweisen von Hash-Werten zu Bildern jedes vom Videorekorder (150) aufgenommenen Einzelbildes;
Speichern von neuen Hash-Werten in einem Speicher (141);
Führen eines Zählers, wobei
das Zuweisen eines wiederholten Hash-Wertes den Zähler um eins erhöht, und
das Zuweisen eines neuen Hash-Wertes den Zähler auf null zurücksetzt; und
Ermitteln, dass ein oder mehrere Bilder im Puffer (120) veraltet sind, zumindest teilweise auf der Grundlage des Zählerwerts.

2. Das System nach Anspruch 1, wobei die Steuervorrichtung (140) ferner dazu konfiguriert ist, wiederholte Hash-Werte im Speicher (141) nicht zu speichern.

3. Das System nach Anspruch 1, wobei:
der Speicher (141) nur eine zweite Anzahl der gespeicherten neuen Hash-Werte beibehält, sodass nur die zuletzt gespeicherten neuen Hash-Werte beibehalten werden; und
die zweite Anzahl größer oder gleich der ersten Anzahl ist.

4. Das System nach Anspruch 3, wobei die zweite Anzahl gleich der ersten Anzahl ist.

5. Das System nach Anspruch 1,
wobei das Ermitteln, dass ein oder mehrere Bilder im Puffer (120) veraltet sind, ferner zumindest teilweise darauf basiert, dass der Zählerwert die erste Anzahl überschreitet.

6. Das System nach Anspruch 1, wobei die erste Bildfrequenz variabel ist.

7. Das System nach Anspruch 1, wobei die erste Bildfrequenz kleiner ist als die zweite Bildfrequenz.

8. Das System nach Anspruch 1,
wobei die erste Zahl zumindest teilweise auf der Grundlage eines höchsten erwarteten Verhältnisses zwischen der ersten und der zweiten Bildfrequenz bestimmt wird.

9. Das System nach Anspruch 1,
wobei die Steuervorrichtung (140) ferner dazu konfiguriert ist, das Aufnehmen veralteter Bilder durch den Videorekorder (150) zu verhindern.

## Revendications

1. Un système (100) comprenant :
une caméra (110) configurée pour capturer une série d'images à une première fréquence d'images ;
une mémoire tampon (120) présentant un premier nombre d'emplacements de stockage en mémoire (121), la mémoire tampon (120) étant configurée pour : à une fréquence d'intervalles de temps, stocker de manière séquentielle et cyclique dans les emplacements de stockage en mémoire (121), l'image la plus récente reçue de la caméra (110) à chaque intervalle ;
un enregistreur vidéo (150) configuré pour enregistrer des images à une deuxième fréquence d'images, de manière séquentielle et cyclique à partir des emplacements de stockage en mémoire (121) ; et
un dispositif de commande (140) configuré pour :
attribuer des valeurs de hachage à des images de chaque trame enregistrée par l'enregistreur vidéo (150) ;
stocker des valeurs de hachage nouvelles dans une mémoire (141) ;
maintenir un compteur, sachant que :
l'attribution d'une valeur de hachage répétée incrémente le compteur d'une unité, et que
l'attribution de valeurs de hachage nouvelles réinitialise le compteur à zéro ; et
déterminer, au moins en partie sur la base de la valeur du compteur, qu'une ou plusieurs images dans la mémoire tampon (120) sont obsolètes.

2. Le système d'après la revendication 1, sachant que le dispositif de commande (140) est en outre configuré pour ne pas stocker de valeurs de hachage répétées dans la mémoire (141).

3. Le système d'après la revendication 1, sachant que :
la mémoire (141) ne conserve qu'un deuxième nombre des valeurs de hachage nouvelles stockées, de manière que seules les valeurs de hachage nouvelles stockées les plus récentes sont conservées ; et que
le deuxième nombre est supérieur ou égal au premier nombre.

4. Le système d'après la revendication 3, sachant que le deuxième nombre est égal au premier nombre.

5. Le système d'après la revendication 1,
sachant que la détermination qu'une ou plusieurs images dans la mémoire tampon (120) sont obsolètes est en outre basée, au moins en partie, sur le fait que la valeur du compteur dépasse le premier nombre.

6. Le système d'après la revendication 1, sachant que la première fréquence d'images est variable.

7. Le système d'après la revendication 1, sachant que la première fréquence d'images est inférieure à la deuxième fréquence d'images.

8. Le système d'après la revendication 1,
sachant que le premier nombre est déterminé, au moins en partie, sur la base d'un rapport maximal attendu entre la première et la deuxième fréquence d'images.

9. Le système d'après la revendication 1,
sachant que le dispositif de commande (140) est en outre configuré pour empêcher l'enregistrement d'images obsolètes par l'enregistreur vidéo (150).
